# EUROPEAN PATENT APPLICATION

(11) **EP 4 711 942 A1**
(43) Date of publication of application: **18.03.2026**
(21) Application number: 24818258.6
(22) Date of filing: 04.02.2024
(51) Int. Cl.: G06F 16/16

(54) **NAS-BASED DIRECTORY DELETION METHOD AND APPARATUS, AND CLIENT AND SERVER**

(30) Priority: 08.06.2023 CN 202310678018; 15.08.2023 CN 202311035113
(71) Applicant: Huawei Technologies Co., Ltd., Shenzhen, Guangdong 518129 (CN)
(72) Inventor: ZHANG, Mingqian, Shenzhen, Guangdong 518129 (CN); YANG, Jing, Shenzhen, Guangdong 518129 (CN)
(74) Representative: Pfenning, Meinig & Partner mbB
(86) International application number: PCT/CN2024/075754
(87) International publication number: WO 2024/250720

(57) **Abstract**

A NAS-based directory deletion method and apparatus, a client, and a server are provided, relating to the field of storage technologies. In the method, after receiving a batch delete instruction that is sent by a NAS client and that instructs to delete a target directory, a first NAS server in a distributed NAS server cluster generates distributed delete instructions for a plurality of subdirectories in the target directory, sends a corresponding distributed delete instruction to a NAS server in which a subdirectory is located, and sends a deletion complete response to the NAS client. According to the method, a large quantity of readdir instructions and delete instructions of the NAS client are replaced by a single batch delete instruction, so that interactions between the NAS client and the NAS server can be greatly reduced, computing resource overheads and network bandwidth overheads of the NAS client can be reduced, and the NAS client is prevented from caching metadata of the target directory, to reduce consumption of memory resources of the NAS client.

## Description

This application claims priority to Chinese Patent Application No. 202310678018.6, filed on June 8, 2023 and entitled "NAS OPERATION METHOD FOR DELETING FILES IN BATCHES", and to Chinese Patent Application No. 202311035113.0, filed on August 15, 2023 and entitled "NAS-BASED DIRECTORY DELETION METHOD AND APPARATUS, CLIENT, AND SERVER", both of which are incorporated herein by reference in their entireties.

### TECHNICAL FIELD

This application relates to the field of storage technologies, and in particular, to a NAS-based directory deletion method and apparatus, a client, and a server.

### BACKGROUND

After a network attached storage (NAS) server is mounted to a NAS client, if a directory including a non-empty subdirectory in the NAS server needs to be deleted, the NAS client first traverses subdirectories in the to-be-deleted directory, sends a read (readdir) instruction to the NAS server for each subdirectory to obtain metadata of each file in the subdirectory, and caches the obtained metadata of each file. The NAS client sends an open command for a subdirectory to the NAS server. The NAS server opens the subdirectory and adds a delete tag for a file in the subdirectory. After the delete tag is added, the NAS client sends a close command for the subdirectory to the NAS server, to close the subdirectory. The NAS client sends a delete (delete) instruction to the NAS server for each file in the directory. The NAS server first deletes the file in the subdirectory, and then deletes the subdirectory, thereby completing the deletion of the entire directory.

However, in the foregoing method, the entire directory deletion procedure requires numerous interactions between the NAS client and the NAS server, occupying a large quantity of network bandwidth resources, and prolonging response time of directory deletion. In addition, after the NAS-based directory deletion method and apparatus, a client, and a server NAS client traverses the subdirectories in the directory, metadata of files in the subdirectory needs to be cached in a memory. When there are a large quantity of files in the to-be-deleted directory, a large quantity of memory resources and computing resources of the NAS client will be consumed, affecting other operations performed by the NAS client.

### SUMMARY

Embodiments of this application provide a NAS-based directory deletion method and apparatus, a client, and a server, to reduce computing resource overheads and network bandwidth overheads when a NAS client deletes a directory in a NAS server, and prevent the NAS client from caching a file in a subdirectory, so as to reduce consumption of memory resources of the NAS client. The technical solutions are as follows.

According to a first aspect, a NAS-based directory deletion method is provided. The method is performed by a NAS server, and the NAS server provides a background service for a NAS client. The method includes:
After receiving a batch delete instruction that is sent by the NAS client and that instructs to delete a target directory, a first NAS server in a distributed NAS server cluster generates distributed delete instructions for a plurality of subdirectories in the target directory, sends a corresponding distributed delete instruction to a NAS server in which a subdirectory is located, and sends a deletion complete response to the NAS client.

The first NAS server is a NAS server that is in the distributed NAS server cluster and that stores the target directory. If the target directory includes a subdirectory, the subdirectory is stored in another NAS server in the distributed NAS server cluster. If the target directory includes a file, the file is stored in the first NAS server.

According to the method, a large quantity of readdir instructions and delete instructions of the NAS client are replaced by a single batch delete instruction, so that interactions between the NAS client and the NAS server can be greatly reduced, computing resource overheads and network bandwidth overheads of the NAS client can be reduced, and the NAS client is prevented from caching metadata of the target directory, to reduce consumption of memory resources of the NAS client.

Optionally, the target directory further includes a plurality of files, and the method further includes:
The first NAS server deletes the plurality of files in the target directory from the first NAS server based on the target directory indicated by the batch delete instruction.

If the target directory includes both a subdirectory and a file, after receiving a delete instruction for the target directory, the first NAS server generates a distributed delete instruction corresponding to each subdirectory, sends the distributed delete instruction to a corresponding NAS server, and deletes the file in the target directory from the first NAS server.

Optionally, the method further includes:
A second NAS server in the distributed NAS server cluster receives a distributed delete instruction, and generates, based on a subdirectory indicated by the received distributed delete instruction, a plurality of distributed delete instructions for a plurality of subdirectories in the subdirectory, where the plurality of subdirectories in the subdirectory are distributed in the plurality of NAS servers in the distributed NAS server cluster. The second NAS server sends, to a NAS server in which each subdirectory in the subdirectory is located, a distributed delete instruction corresponding to the subdirectory.

Each NAS server that is in the distributed NAS server cluster and that stores each level of subdirectory or a file in the target directory sequentially performs the foregoing process based on a corresponding subdirectory level, until all levels of subdirectories and files in the target directory are deleted.

In the foregoing method, each NAS server that is in the distributed NAS server cluster and that stores each level of subdirectory or a file in the target directory sequentially performs a deletion operation based on a corresponding subdirectory level. This avoids a case in which a single NAS server executes a deletion task, and can reduce burden of the NAS server.

Optionally, the subdirectory further includes a plurality of files, and the method further includes:
The second NAS server deletes the plurality of files in the subdirectory from the second NAS server based on the subdirectory indicated by the received distributed delete instruction.

Optionally, subdirectories indicated by different distributed delete instructions are located in different NAS servers.

Optionally, the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

Optionally, that the first NAS server sends the deletion complete response to the NAS client includes:
The first NAS server sends a first deletion response to the NAS client when the target directory has been deleted within first preset duration, where the first deletion response indicates that the target directory has been deleted.

In the foregoing method, in the synchronous deletion mode, if the distributed NAS server cluster deletes the target directory within the first preset duration, the first NAS server actively sends, to the NAS client, the first deletion response indicating that the directory has been deleted, so that the NAS client does not need to send a query instruction to the NAS server. This can further reduce interactions between the NAS client and the NAS server, save bandwidth resources, and improve performance of a NAS file deletion operation.

Optionally, the method further includes:
The first NAS server sends a second deletion response to the NAS client when the directory has not been deleted within first preset duration, where the second deletion response indicates that the target directory has not been deleted.

That the first NAS server sends the deletion complete response to the NAS client includes: The first NAS server receives at least one query instruction sent by the NAS client, where each query instruction is spaced apart by second preset duration, and each query instruction carries a deletion task identifier corresponding to the batch delete instruction.

The first NAS server returns a corresponding query response to the NAS client based on each query instruction, where each query response carries an execution result of the deletion task, and a query response corresponding to a last query instruction in the at least one query instruction indicates that the target directory has been deleted.

In the foregoing method, in the synchronous deletion mode, if the distributed NAS server cluster does not delete the target directory within the first preset duration, the first NAS server actively sends, to the NAS client, the second deletion response indicating that the target directory has not been deleted, and the distributed NAS server cluster continues to execute the deletion task, so that the NAS client periodically sends a query instruction to the first NAS server. This can ensure that the NAS client can learn of and synchronize a deletion status of the target directory in a timely manner, and improve performance of a NAS file deletion operation.

Optionally, the method further includes:
The first NAS server sends a second deletion response to the NAS client when receiving the batch delete instruction, where the second deletion response indicates that the directory has not been deleted. That the first NAS server sends the deletion complete response to the NAS client includes: The first NAS server sends an asynchronous deletion response to the NAS client if the directory has been deleted, where the asynchronous deletion response indicates that the target directory has been deleted.

In the foregoing method, in the asynchronous deletion mode, after the distributed NAS server cluster deletes the target directory, the first server actively sends, to the NAS client, the asynchronous deletion response indicating that the target directory has been deleted, and the NAS client only needs to start an asynchronous snoop task to receive the asynchronous deletion response. This can further reduce interactions between the NAS client and the NAS server, save bandwidth resources, and improve performance of a NAS file deletion operation.

According to a second aspect, a NAS-based directory deletion method is provided. The method is performed by a NAS client, and a NAS server provides a background service for the NAS client. The method includes:
The NAS client sends a batch delete instruction to a first NAS server in a distributed NAS server cluster in response to a deletion operation performed on a target directory on the NAS client, where the batch delete instruction instructs to delete the target directory. The NAS client receives a deletion complete response sent by the first NAS server, where the deletion complete response indicates that the target directory has been deleted. The NAS client displays a deletion success prompt of the target directory, where the deletion success prompt indicates that the target directory has been deleted.

Optionally, the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

Optionally, that the NAS client receives the deletion complete response sent by the first NAS server includes:
The NAS client receives a first deletion response sent by the first NAS server, where the first deletion response indicates that the target directory has been deleted within first preset duration.

Optionally, the method further includes:
The NAS client receives a second deletion response sent by the first NAS server, where the second deletion response indicates that the target directory has not been deleted. If the NAS client receives, after first preset duration elapses since sending the batch delete instruction, the second deletion response sent by the first NAS server, the NAS client sends a query instruction to the first NAS server at intervals of second preset duration, where the query instruction carries a deletion task identifier and a verification code that correspond to the batch delete instruction. The NAS client receives a query response that is returned by the first NAS server based on each query instruction, where the query response carries an execution result of the deletion task, and a query response corresponding to a last query instruction sent by the NAS client indicates that the target directory has been deleted.

Optionally, the method further includes:
The NAS client receives a second deletion response sent by the first NAS server, where the second deletion response indicates that the target directory has not been deleted. If the NAS client immediately receives, after sending the batch delete instruction, the second deletion response sent by the first NAS server, that the NAS client receives the deletion complete response sent by the first NAS server includes: The NAS client receives an asynchronous deletion response sent by the first NAS server, where the asynchronous deletion response indicates that the target directory has been deleted.

According to a third aspect, a NAS-based directory deletion apparatus is provided. The apparatus includes at least one functional module, and the at least one functional module is configured to perform the NAS-based directory deletion method provided in the first aspect or any possible implementation of the first aspect.

According to a fourth aspect, a NAS-based directory deletion apparatus is provided. The apparatus includes at least one functional module, and the at least one functional module is configured to perform the NAS-based directory deletion method provided in the second aspect or any possible implementation of the second aspect.

According to a fifth aspect, a NAS server is provided. The NAS server includes a processor and a memory, the memory stores program code, and the processor is configured to execute the program code, to cause the NAS server to perform the NAS-based directory deletion method provided in the first aspect or any possible implementation of the first aspect.

According to a sixth aspect, a distributed NAS server cluster is provided. The distributed NAS server cluster includes a plurality of NAS servers, each NAS server includes a processor and a memory, the memory stores program code, and the processor is configured to execute the program code, to cause the distributed NAS server cluster to perform the NAS-based directory deletion method provided in the first aspect or any possible implementation of the first aspect.

According to a seventh aspect, a NAS client is provided. The NAS client includes a processor and a memory, the memory stores program code, and the processor is configured to execute the program code, to cause the NAS client to perform the NAS-based directory deletion method provided in the first aspect or any possible implementation of the first aspect.

In this application, the implementations provided in the foregoing aspects may be further combined to provide more implementations.

### BRIEF DESCRIPTION OF DRAWINGS

FIG. 1 is a diagram of an implementation environment of a NAS-based directory deletion method according to an embodiment of this application;
FIG. 2 is a flowchart of a NAS-based directory deletion method according to an embodiment of this application;
FIG. 3 is a flowchart of a NAS-based directory deletion method according to an embodiment of this application;
FIG. 4 is a schematic flowchart of a NAS-based directory deletion method in a synchronous deletion mode according to an embodiment of this application;
FIG. 5 is a flowchart of a NAS-based directory deletion method according to an embodiment of this application;
FIG. 6 is a schematic flowchart of a NAS-based directory deletion method in an asynchronous deletion mode according to an embodiment of this application;
FIG. 7 is a diagram of a structure of a NAS-based directory deletion apparatus according to an embodiment of this application;
FIG. 8 is a diagram of a structure of a NAS-based directory deletion apparatus according to an embodiment of this application;
FIG. 9 is a diagram of a structure of a NAS client according to an embodiment of this application;
FIG. 10 is a diagram of a structure of a NAS server according to an embodiment of this application; and
FIG. 11 is a diagram of a structure of a distributed NAS server cluster according to an embodiment of this application.

### DESCRIPTION OF EMBODIMENTS

To make objectives, technical solutions, and advantages of this application clearer, the following further describes the implementations of this application in detail with reference to the accompanying drawings.

**First, an implementation environment of embodiments of this application is described.**

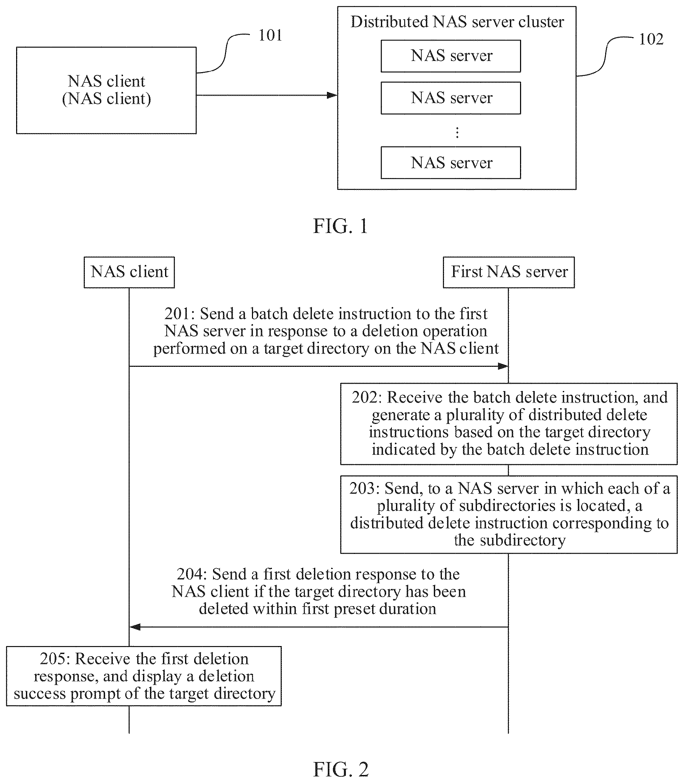

FIG. 1 is a diagram of an implementation environment of a NAS-based directory deletion method according to an embodiment of this application. As shown in FIG. 1, the implementation environment includes a NAS client 101 and a distributed NAS server cluster 102. The distributed NAS server cluster 102 includes a plurality of NAS servers. The NAS client 101 and the distributed NAS server cluster 102 are communicatively connected over a wired network or a wireless network.

The NAS client 101 may be a Windows service message block (server message block, SMB) client, or may be a Linux or Unix network file system (network file system, NFS) client. This is not limited in embodiments of this application. The NAS client 101 may run on at least one terminal among devices such as a desktop computer, a laptop computer, a virtual reality computing device, an augmented reality computing device, a wireless computing device, and a laptop portable computer. The NAS client 101 has a communication function and can access internet. The NAS client 101 may be generally one of a plurality of NAS clients. A person skilled in the art may know that there may be more or fewer NAS clients. For example, the distributed NAS server cluster 102 is mounted to the NAS client 101, so that the distributed NAS server cluster 102 provides a background service for the NAS client 101. The NAS client 101 may send a delete instruction or a query instruction for a target directory to the distributed NAS server cluster 102. After receiving the instruction, a first NAS server in the distributed NAS server cluster 102 performs a deletion operation or a query operation corresponding to the instruction, and returns a corresponding response to the NAS client 101. The NAS client 101 further has a display function, and can display a corresponding prompt based on the response from the first NAS server. For example, after receiving the response that is sent by the first NAS server and that indicates that the target directory has been deleted, the NAS client 101 displays a directory deletion success prompt, where the directory deletion success prompt indicates that the target directory has been deleted.

The distributed NAS server cluster 102 includes a plurality of NAS servers, and a plurality of subdirectories in a same directory are distributed in the plurality of NAS servers in the distributed NAS server cluster 102. The NAS server is a special server dedicated to data storage, including a storage device (for example, a disk array, a CD/DVD drive, a tape drive, or a removable storage medium) and embedded system software, and can provide a cross-platform file sharing function. The NAS server may be a Windows SMB server, or may be a Linux or Unix NFS server. This is not limited in embodiments of this application. For example, the distributed NAS server cluster 102 provides a background service for the NAS client 101. If the NAS client 101 is an SMB client, the NAS server that provides a background service for the NAS client 101 is an SMB server. If the NAS client 101 is an NFS client, the NAS server that provides a background service for the NAS client 101 is an NFS server. For example, the first NAS server in the distributed NAS server cluster 102 can receive a delete instruction or a query instruction sent by the NAS client 101, perform a corresponding deletion operation or query operation based on the received instruction, and return a corresponding response to the NAS client 101. A deletion operation mode used by the first NAS server is any one of a synchronous deletion mode and an asynchronous deletion mode. In some embodiments, the first NAS server provides a batch deletion interface, and the batch deletion interface may be invoked by a batch delete instruction sent by the NAS client, to perform a deletion operation on a directory.

In some embodiments, the wireless network or the wired network uses a standard communication technology and/or protocol. The network is usually internet, but may alternatively be any network, including but not limited to any combination of a local area network (local area network, LAN), a metropolitan area network (metropolitan area network, MAN), a wide area network (wide area network, WAN), a mobile network, a wired network, a wireless network, a private network, or a virtual private network. In some embodiments, technologies and/or formats including a hypertext markup language (hypertext markup language, HTML), an extensible markup language (extensible markup language, XML), and the like are used between the NAS client 101 and the distributed NAS server cluster 102 to represent data blocks exchanged over a network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, a customized data communication technology and/or a dedicated data communication technology can further be used to replace or supplement the foregoing data communication technology.

Embodiments of this application provide a NAS-based directory deletion method. In the method, after receiving a batch delete instruction that is sent by a NAS client and that instructs to delete a target directory, a first NAS server in a distributed NAS server cluster generates distributed delete instructions for a plurality of subdirectories in the target directory, sends a corresponding distributed delete instruction to a NAS server in which a subdirectory is located, and sends a deletion complete response to the NAS client. According to the method, a large quantity of readdir instructions and delete instructions of the NAS client are replaced by a single batch delete instruction, so that interactions between the NAS client and the NAS server can be greatly reduced, computing resource overheads and network bandwidth overheads of the NAS client can be reduced, and the NAS client is prevented from caching metadata of the target directory, to reduce consumption of memory resources of the NAS client.

In embodiments of this application, a batch delete instruction, a query instruction, and related responses to the batch delete instruction and the query instruction are defined. The following first describes the foregoing instructions and the responses thereof.
(1) Batch delete instruction: The batch delete instruction instructs to delete a target directory. The batch delete instruction carries a directory identifier and a deletion mode identifier. The directory identifier indicates a to-be-deleted target directory. The deletion mode identifier indicates a deletion operation mode used by a first NAS server in a distributed NAS server cluster on the target directory, and the deletion operation mode is any one of a synchronous deletion mode and an asynchronous deletion mode.

The batch delete instruction may be represented by the following command word FULL_PATH_REMOVE:

```
         FULL_PATH_REMOVE{
              component4 target;
              bool isSync;
          }
```

target represents the directory identifier, and a value of isSync indicates the deletion operation mode, where isSync=1 indicates that the deletion operation mode is the synchronous deletion mode, and isSync=0 indicates that the deletion operation mode is the asynchronous deletion mode.

(2) Response to a batch delete instruction: The response to the batch delete instruction is used to return, to a NAS client, an execution result of a deletion task corresponding to the batch delete instruction. The batch delete instruction carries a deletion task identifier, a verification code, and an error code that correspond to the batch delete instruction. The error code is determined based on the execution result of the deletion task. If the execution result of the deletion task is that a target directory has been deleted, the error code is a first error code. If the execution result of the deletion task is that a target directory has not been deleted, the error code is a second error code. The response to the batch delete instruction includes a first deletion response and a second deletion response, where an error code in the first deletion response is the first error code, and an error code in the second deletion response is the second error code.

The response to the batch delete instruction may be represented by the following command word FULL_PATH_REMOVE_pending:

```
         FULL_PATH_REMOVE_pending{
              Long query_id;
              Verfier4 verf;
          };
         union FULL_PATH_REMOVE resok res switch (nfsstat4 status){
              case NFS4_OK: NFS4_OK;
              case NFS4_PENDING:FULL_PATH_REMOVE_pending res;
              default: void;
          }
```

query _id represents the deletion task identifier corresponding to the batch delete instruction, verf represents the verification code, status represents the execution result of the deletion task, and FULL_PATH_REMOVE resok res switch (nfsstat4 status) represents the error code. If status is NFS4_OK, it indicates that the execution result of the deletion task is that the target directory has been deleted, and the error code is the first error code (NFS4_OK). If status is NFS4_PENDING, it indicates that the execution result of the deletion task is that the target directory has not been deleted, and the error code is the second error code (FULL_PATH_REMOVE_pending res).

(3) Query instruction: The query instruction is used to query an execution result of a deletion task corresponding to a batch delete instruction. The query instruction carries a deletion task identifier and a verification code that correspond to the batch delete instruction.

The query instruction may be represented by the following command word QUERY_PATH_DEL:

```
         QUERY_PATH_DEL{
              Long query _id;
              Verfier4 verf;
          }
 
```

query _id indicates the deletion task identifier corresponding to the batch delete instruction, and verf indicates the verification code.

(4) Query response: The query response is used to return an execution result of a deletion task to a NAS client. The query response carries the execution result of the deletion task.

The query response may be represented by the following command word struct QUERY_PATH_DEL 4res:

```
         struct QUERY _PATH_DEL 4res {
              nfsstat4 status;
          }
```

status represents the execution result of the deletion task.

(5) Asynchronous deletion response: The asynchronous deletion response is used to return, in an asynchronous deletion mode, an execution result of a deletion task to a NAS client when a target directory has been deleted. The asynchronous deletion response carries a deletion task identifier, a verification code, and the execution result of the deletion task. The execution result of the deletion task is that the target directory has been deleted.

The asynchronous deletion response may be represented by the following command word CB_FULL_PATH_REMOVE:

```
         CB_FULL_PATH_REMOVE{
                    Long query _id;
                    verifier4 verf;
                    nfsstat4 status;
          }
```

query _id indicates a deletion task identifier corresponding to a batch delete instruction, verf indicates the verification code, and status represents the execution result of the deletion task. The execution result of the deletion task is that the target directory has been deleted.

It should be noted that the command words of the instructions or the responses defined in the examples are defined based on an NFS protocol. In some embodiments, the instructions or the responses are further defined based on another protocol, for example, an SMB protocol. This is not limited in embodiments of this application.

Based on the foregoing instructions and responses, the following specifically describes a procedure of the NAS-based directory deletion method provided in embodiments of this application. The batch delete instruction sent by the NAS client may carry a deletion mode identifier. The deletion mode identifier indicates a deletion operation mode used by the first NAS server in the distributed NAS server cluster on the target directory. The deletion operation mode is any one of a synchronous deletion mode or an asynchronous deletion mode. Correspondingly, after receiving the batch delete instruction, the NAS server may delete the target directory in the synchronous deletion mode or the asynchronous deletion mode based on the deletion mode identifier in the batch delete instruction.

The following first describes the method by using the synchronous deletion mode as an example. In the synchronous deletion mode, if the distributed NAS server cluster deletes the target directory within first preset duration after the first NAS server receives the batch delete instruction, the first NAS server directly sends, to the NAS client, a first deletion response indicating that the target directory has been deleted; or if the distributed NAS server cluster does not delete the target directory within first preset duration, the first NAS server first sends, to the NAS client, a second deletion response indicating that the target directory has not been deleted, the distributed NAS server cluster continues to execute a deletion task, and after receiving the second deletion response, the NAS client may periodically send a query instruction to the first NAS server to query an execution result of the deletion task, until the deletion task for the target directory is completed. The following separately describes the two cases.

First, the case in which the distributed NAS server cluster deletes the target directory within the first preset duration is used as an example for description. FIG. 2 is a flowchart of a NAS-based directory deletion method according to an embodiment of this application. As shown in FIG. 2, interaction between a NAS client and a distributed NAS server cluster is used as an example. The method includes the following step 201 to step 205.

**201: The NAS client sends a batch delete instruction to a first NAS server in a distributed NAS server cluster in response to a deletion operation performed on a target directory on the NAS client, where the batch delete instruction instructs to delete the target directory, the batch delete instruction carries a deletion mode identifier, and the deletion mode identifier indicates that a deletion operation mode used by the first NAS server on the target directory is a synchronous deletion mode.**

The deletion operation performed on the target directory on the NAS client may be first selecting the target directory on the NAS client, and right-clicking a mouse to select a "delete" option; may be first selecting the target directory on the NAS client, and pressing a "delete" key on a keyboard; or may be a deletion operation performed on the target directory on the NAS client in another manner. This is not limited in this embodiment of this application.

The first NAS server is a NAS server that is in the distributed NAS server cluster and that stores the target directory. If the target directory includes a subdirectory, the subdirectory is stored in another NAS server in the distributed NAS server cluster. If the directory target includes a file, the file is stored in the first NAS server.

The NAS client sends the batch delete instruction to the first NAS server based on a stateful protocol. For example, the NAS client is an SMB client, and the NAS server is an SMB server. The SMB client sends a batch delete instruction to the SMB server based on the stateful protocol (an SMB protocol). The SMB client first sends an open (open) instruction for the target directory to the SMB server in response to a deletion operation performed on the target directory on the SMB client. After receiving the open instruction, the SMB server opens the target directory, sets delete tags for a file and a subdirectory in the target directory, and returns a response to the open instruction to the SMB client. The SMB client sends a close (close) instruction for the target directory to the SMB server after receiving the response to the open instruction. After receiving the close instruction, the SMB server closes the target directory, and returns a response to the close instruction to the SMB client. The SMB client sends the batch delete instruction to the NAS server only after receiving the response to the close instruction. For another example, the NAS client is an NFS client, and the NAS server is an NFS server. The NFS client sends a batch delete instruction to the NFS server based on the stateful protocol (an NFS protocol). The NFS client first sends a directory read (readdir) instruction for the target directory to the NFS server in response to a deletion operation performed on the target directory on the NFS client. The NFS server returns metadata of a file and a subdirectory in the target directory to the NFS client after receiving the readdir instruction. The NFS client sends the batch delete instruction to the NFS server only after receiving the metadata. The NFS client sends the batch delete instruction to the NFS server in a form of a combined packet.

**202: The first NAS server receives the batch delete instruction, and generates** a **plurality of distributed delete instructions based on the target directory indicated by the batch delete instruction, where the plurality of distributed delete instructions instruct** to **delete a plurality of subdirectories in the target directory, and the plurality of subdirectories are distributed in a plurality of NAS servers in the distributed NAS server cluster.**

A process in which the first NAS server generates the plurality of distributed delete instructions based on the target directory indicated by the batch delete instruction includes: determining, based on a directory identifier carried in the batch delete instruction, a to-be-deleted target directory from a directory stored in the first NAS server; determining, based on metadata of the to-be-deleted target directory, the NAS servers in which the plurality of subdirectories in the target directory are located; and generating a distributed delete instruction corresponding to each NAS server.

**203: The first NAS server sends, to a NAS server in which each of the plurality of subdirectories is located, a distributed delete instruction corresponding to the subdirectory.**

Subdirectories indicated by different distributed delete instructions may be located in different NAS servers, or may be located in a same NAS server. This is not limited in this embodiment of this application.

It should be noted that step 202 and step 203 are described by using an example in which the target directory includes only a subdirectory. In some embodiments, the target directory includes only a file, the file in the target directory is stored in the first NAS server, and the first NAS server deletes the file in the target directory from the first NAS server after receiving the batch delete instruction for the target directory. In some other embodiments, if the target directory includes both a subdirectory and a file, after receiving a delete instruction for the target directory, the first NAS server generates a distributed delete instruction corresponding to each subdirectory, sends the distributed delete instruction to a corresponding NAS server, and deletes the file in the target directory from the first NAS server.

After receiving the distributed delete instruction, a second NAS server in the distributed NAS server cluster performs a deletion operation on a corresponding subdirectory stored in the second NAS server. If the subdirectory of the target directory includes only a file, the second NAS server deletes, based on a subdirectory indicated by the received distributed delete instruction, a file in the subdirectory from the second NAS server. If the subdirectory of the target directory includes only a next-level subdirectory, the second NAS server generates distributed delete instructions for a plurality of subdirectories in the subdirectory, and sends, to a NAS server in which each subdirectory in the subdirectory is located, a distributed delete instruction corresponding to the subdirectory. If the subdirectory of the target directory includes both a file and a next-level subdirectory, the second NAS server first generates a distributed delete instruction corresponding to each subdirectory in the subdirectory, sends the distributed delete instruction to a NAS server in which each subdirectory in the subdirectory is located, and deletes a file in the subdirectory from the second NAS server. This process is similar to step 202 and step 203, and details are not described again. Each NAS server that is in the distributed NAS server cluster and that stores each level of subdirectory or a file in the target directory sequentially performs the foregoing process based on a corresponding subdirectory level, until all levels of subdirectories and files in the target directory are deleted.

**204: The first NAS server sends a first deletion response to the NAS client if** the **target directory has been deleted within first preset duration, where the first deletion response indicates that the target directory has been deleted.**

The first preset duration may be set by the NAS client by sending a setting instruction to the first NAS server, or may be a value preset by the first NAS server. A length of the first preset duration may be set based on an actual requirement. For example, the first preset duration is set based on a response delay requirement on the distributed NAS server cluster. If a response delay of the distributed NAS server cluster is required to be shorter, the first preset duration is set to be shorter; or if a response delay of the distributed NAS server cluster is required to be longer, the first preset duration is set to be longer. This is not limited in this embodiment of this application.

That the target directory has been deleted means that all levels of subdirectories and files in the target directory have been deleted.

The first deletion response carries a deletion task identifier of a deletion task, a verification code, and a first error code that correspond to the batch delete instruction. The first deletion response may be represented by the command word FULL_PATH_REMOVE_pending. Details are not described herein again. The deletion task identifier and the verification code may be generated by the first NAS server when the target directory has been deleted within the first preset duration. The first NAS server stores the generated deletion task identifier and verification code. In some embodiments, the deletion task identifier and the verification code are generated by the first NAS server after the first NAS server receives the batch delete instruction. A generation occasion of the deletion task identifier and the verification code is not limited in this embodiment of this application. It should be noted that the deletion task identifier and the verification code may alternatively be generated and stored by any NAS server in the distributed NAS server cluster. This is not limited in this embodiment of this application.

**205: The NAS client receives the first deletion response, and displays a deletion success prompt of the target directory, where the deletion success prompt indicates that the target directory has been deleted.**

The deletion success prompt may include at least one of a name of the deleted target directory, a storage path of the deleted target directory, a quantity of subdirectories or files included in the target directory, a size of a storage resource occupied by the target directory, and duration used for deleting the target directory. This is not limited in this embodiment of this application.

In the foregoing method, when the target directory is to be deleted, the NAS client needs to send only a single batch delete instruction for the target directory to the first NAS server in the distributed NAS server cluster. After receiving the batch delete instruction, the first NAS server generates, based on the single batch delete instruction, a plurality of distributed delete instructions for the plurality of subdirectories in the target directory, and separately sends the plurality of distributed delete instructions to the NAS servers corresponding to the subdirectories for execution. In this way, the NAS client does not need to send a delete instruction for each subdirectory in the target directory. This reduces a quantity of interactions between the NAS client and the NAS server in a process of deleting the target directory, avoids consumption of a large quantity of memory resources, computing resources, and bandwidth resources, and shortens a response delay. Further, each NAS server that is in the distributed NAS server cluster and that stores each level of subdirectory or a file in the target directory sequentially performs a deletion operation based on a corresponding subdirectory level. This avoids a case in which a single NAS server executes the deletion task, and can reduce burden of the NAS server. In addition, in the synchronous deletion mode, if the distributed NAS server cluster deletes the target directory within the first preset duration, the first NAS server actively sends, to the NAS client, the first deletion response indicating that the directory has been deleted. In this way, the NAS client does not need to send a query instruction to the NAS server. This can further reduce the interactions between the NAS client and the NAS server, save the bandwidth resources, and improve performance of a NAS file deletion operation.

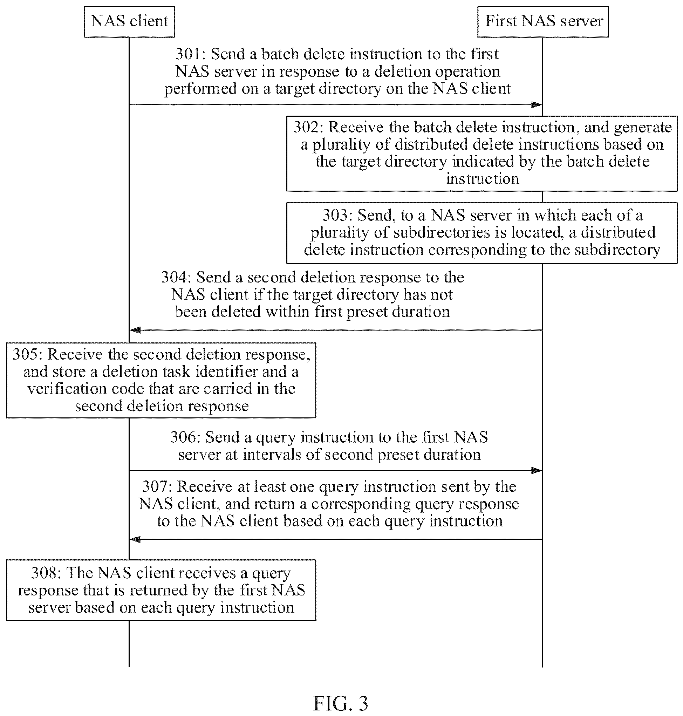

The case in which the distributed NAS server cluster does not delete the target directory within the first preset duration in the synchronous mode is used as an example for description below. FIG. 3 is a flowchart of a NAS-based directory deletion method according to an embodiment of this application. As shown in FIG. 3, interaction between a NAS client and a distributed NAS server cluster is used as an example. The method includes the following step 301 to step 308.

**301: The NAS client sends a batch delete instruction to a first NAS server in a distributed NAS server cluster in response to a deletion operation performed on a target directory on the NAS client, where the batch delete instruction instructs to delete the target directory, the batch delete instruction carries a deletion mode identifier, and the deletion mode identifier indicates that a deletion operation mode used by the first NAS server on the target directory is a synchronous deletion mode.**

**302: The first NAS server receives the batch delete instruction, and generates a plurality of distributed delete instructions based on the target directory indicated by the batch delete instruction, where the plurality of distributed delete instructions instruct to delete a plurality of subdirectories in the target directory, and the plurality of subdirectories are distributed in a plurality of NAS servers in the distributed NAS server cluster.**

**303: The first NAS server sends, to a NAS server in which each of the plurality of subdirectories is located, a distributed delete instruction corresponding to the subdirectory.**

Step 301 to step 303 are similar to step 201 to step 203, and details are not described again.

**304: The first NAS server sends a second deletion response to the NAS client if the target directory has not been deleted within first preset duration, where the second deletion response indicates that the target directory has not been deleted.**

The second deletion response carries a deletion task identifier of a deletion task, a verification code, and a second error code that correspond to the batch delete instruction. The second deletion response may be represented by the command word FULL_PATH_REMOVE_pending. Details are not described herein again. The deletion task identifier and the verification code are generated by the first NAS server when the target directory has not been deleted within second preset duration. A second NAS server stores the generated deletion task identifier and verification code. In some embodiments, the deletion task identifier and the verification code are generated by the first NAS server after the first NAS server receives the batch delete instruction. This is not limited in this embodiment of this application. It should be noted that the deletion task identifier and the verification code may alternatively be generated and stored by any NAS server in the distributed NAS server cluster. This is not limited in this embodiment of this application.

When the first NAS server sends the second deletion response to the NAS client, the distributed NAS server cluster continues to execute the deletion task for the target directory.

**305: The NAS client receives the second deletion response, and stores the deletion task identifier and the verification code that are carried in the second deletion response.**

The NAS client stores, in a memory, the deletion task identifier and the verification code that are carried in the second deletion response, so that when a response carrying the deletion task identifier is received next time, a verification code in the received response is verified based on the stored verification code, to ensure that a subsequently received response and the second deletion response correspond to a same deletion task.

**306: The NAS client sends a query instruction to the first NAS server at intervals of the second preset duration, where the query instruction carries the deletion task identifier and the verification code that are carried in the second deletion response.**

The second preset duration may be set based on an actual requirement, for example, set based on a quantity of storage resources occupied by the target directory. If the target directory occupies a larger quantity of storage resources, the second preset duration is longer. If the target directory occupies a smaller quantity of storage resources, the second preset duration is shorter. Because duration used for deleting the target directory is related to the quantity of storage resources occupied by the target directory, the second preset duration is set based on the quantity of storage resources occupied by the target directory. This can avoid a case in which the target directory is still not deleted after a plurality of queries due to excessively intensive sending of query instructions, to avoid an invalid query and save bandwidth resources. A manner of setting the second preset duration is not limited in this embodiment of this application.

In the foregoing method, the query instruction sent by the NAS client carries the deletion task identifier and the verification code that are carried in the second deletion response previously received by the NAS client, so that it can be ensured that a query result of the query instruction and the second deletion response are specific to a same deletion task, to ensure accuracy of the query result.

**307: The first NAS server receives at least one query instruction sent by the NAS client, and returns a corresponding query response to the NAS client based on each query instruction, where each query response carries an execution result of the deletion task, and a query response corresponding to a last query instruction in the at least one query instruction indicates that the target directory has been deleted.**

The query instruction may be represented by the command word QUERY_PATH_DEL, and the query response may be represented by the command word struct QUERY_PATH_DEL 4res. Details are not described herein again.

Each time the first NAS server receives a query instruction, the first NAS server queries, based on a deletion task identifier carried in the query instruction, an execution result of a deletion task indicated by the deletion task identifier, and returns a query response to the NAS client based on the found execution result. The execution result of the deletion task is either that the target directory has been deleted or that the target directory has not been deleted.

In some embodiments, each time the first NAS server receives a query instruction, the first NAS server matches a verification code carried in the query instruction and the verification code stored in the first NAS server; and if the matching fails, returns error information; or if the matching succeeds, queries an execution result of a deletion task indicated by a deletion task identifier. In the method, before querying the execution result of the deletion task, the first NAS server first verifies the verification code carried in the query instruction, and performs query only when the verification succeeds. This can avoid an invalid query and save computing resources of the first NAS server.

**308: The NAS client receives a query response that is returned by the first NAS server based on each query instruction.**

If an execution result of the deletion task carried in any query response indicates that the directory has been deleted, the NAS client displays a deletion success prompt of the target directory. This process is similar to step 205, and details are not described again. If an execution result of the deletion task carried in any query response indicates that the directory has not been deleted, the NAS client continues to perform step 306, that is, sends a query instruction to the first NAS server at intervals of the second preset duration until the target directory is deleted. In some embodiments, if the target directory has not been deleted within third preset duration, the NAS client no longer sends a query instruction to the first NAS server, but returns error information, where the error information indicates that the target directory fails to be deleted.

In the foregoing method, when the target directory is to be deleted, the NAS client needs to send only a single batch delete instruction for the target directory to the first NAS server in the distributed NAS server cluster. After receiving the batch delete instruction, the first NAS server generates, based on the single batch delete instruction, a plurality of distributed delete instructions for the plurality of subdirectories in the target directory, and separately sends the plurality of distributed delete instructions to the NAS servers corresponding to the subdirectories for execution. In this way, the NAS client does not need to send a delete instruction for each subdirectory in the target directory. This reduces a quantity of interactions between the NAS client and the NAS server in a process of deleting the target directory, avoids consumption of a large quantity of memory resources, computing resources, and bandwidth resources, and shortens a response delay. Further, each NAS server that is in the distributed NAS server cluster and that stores each level of subdirectory or a file in the target directory sequentially performs a deletion operation based on a corresponding subdirectory level. This avoids a case in which a single NAS server executes the deletion task, and can reduce burden of the NAS server. In addition, in the synchronous deletion mode, if the distributed NAS server cluster does not delete the target directory within the first preset duration, the first NAS server actively sends, to the NAS client, the second deletion response indicating that the target directory has not been deleted, and the distributed NAS server cluster continues to execute the deletion task. In this way, the NAS client periodically sends a query instruction to the first NAS server. This can ensure that the NAS client can learn and synchronize a deletion status of the target directory in a timely manner, and improve performance of a NAS file deletion operation.

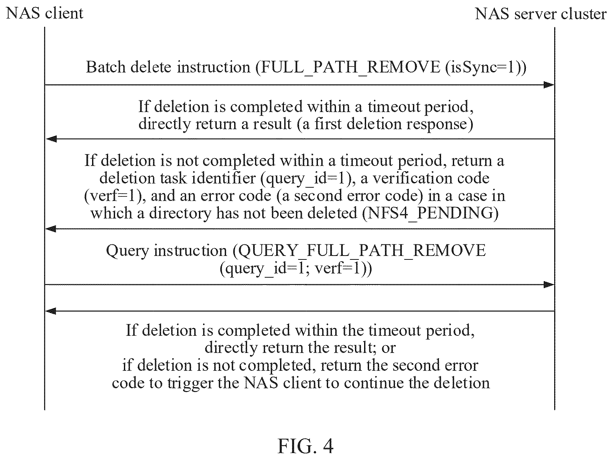

The procedures shown in FIG. 2 and FIG. 3 are described below by using FIG. 4 as an example. FIG. 4 is a schematic flowchart of a NAS-based directory deletion method in a synchronous deletion mode according to an embodiment of this application. As shown in FIG. 4, a NAS client sends a batch delete instruction (FULL_PATH_REMOVE) to a first NAS server. In the batch delete instruction, isSync is set to true, to instruct the first NAS server to use the synchronous deletion mode when the first NAS server executes a deletion task. A distributed NAS server cluster completes deletion as much as possible within a timeout period (namely, a second preset time period). If deletion cannot be completed within the timeout period, the first NAS server generates a deletion task identifier (query _id=1) and a verification code (verf=1) that correspond to the batch delete instruction, sets an error code to an error code in a case in which the directory has not been deleted (NFS4_PENDING), namely, a second error code, and returns, to the NAS client, a second deletion response that carries query _id, verf, and the second error code. After receiving the response, the NAS client checks the error code carried in the response. If the error code is the error code in the case of NFS4_PENDING, the NAS client delays sending of a query instruction (QUERY_FULL_PATH_REMOVE). The query instruction needs to carry quey_id and verf. If the query instruction received by the first NAS server includes information about query_id and verf, the first NAS server compares query _id and verf in the instruction with query _id and verf that are cached. If the comparison fails, an error is reported; or if the comparison succeeds, a query response is returned to the NAS client, to return an execution result of the deletion task to the NAS client. If the distributed NAS server cluster has completed deletion within the timeout period, a first deletion response that carries query _id, verf, and a first error code (an error code in the case of NFS4_OK) is returned to the NAS client, and the NAS client displays a deletion success prompt of a target directory.

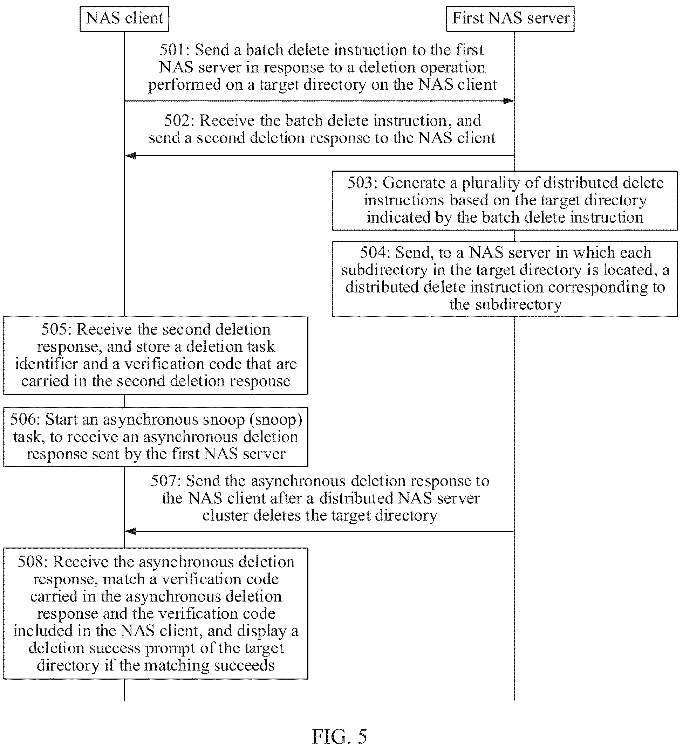

The embodiments shown in FIG. 2 and FIG. 3 are described by using the synchronous deletion mode as an example. Descriptions are provided below by using the asynchronous deletion mode as an example. FIG. 5 is a flowchart of a NAS-based directory deletion method according to an embodiment of this application. As shown in FIG. 5, interaction between a NAS client and a distributed NAS server cluster is used as an example. The method includes the following step 501 to step 508.

**501: The NAS client sends a batch delete instruction to a first NAS server in a distributed NAS server cluster in response to a deletion operation performed on a target directory on the NAS client, where the batch delete instruction instructs to delete the target directory, the batch delete instruction carries a deletion mode identifier, and the deletion mode identifier indicates that the deletion operation is performed by the first NAS server on the target directory in an asynchronous deletion mode.**

Step 501 is similar to step 201. A difference lies in that the deletion mode identifier carried in the batch delete instruction in step 501 indicates that the deletion operation is performed by the first NAS server on the target directory in the asynchronous deletion mode, while the deletion mode identifier carried in the batch delete instruction in step 201 indicates that the deletion operation is performed by the first NAS server on the target directory in the synchronous deletion mode. Similarities are not described in detail again.

**502: The first NAS server receives the batch delete instruction, and sends a second deletion response to the NAS client, where the second deletion response indicates that the target directory has not been deleted.**

Step 502 is similar to step 302. A difference lies in that in step 502, the first NAS server immediately sends the second deletion response to the NAS client after receiving the batch delete instruction, while in step 302, the first NAS server sends the second deletion response to the NAS client only when the first NAS server does not delete the target directory within the second preset duration. Similarities are not described in detail again.

**503: The first NAS server generates a plurality of distributed delete instructions based on the target directory indicated by the batch delete instruction, where the plurality of distributed delete instructions instruct to delete a plurality of subdirectories in the target directory, and the plurality of subdirectories are distributed in a plurality of NAS servers in the distributed NAS server cluster.**

**504: The first NAS server sends, to a NAS server in which each subdirectory in the target directory is located, a distributed delete instruction corresponding to the subdirectory.**

Step 503 and step 504 are similar to step 202 and step 203, and details are not described again.

**505: The NAS client receives the second deletion response, and stores a deletion task identifier and a verification code that are carried in the second deletion response.**

Step 505 is similar to step 305, and details are not described again.

**506: The NAS client starts an asynchronous snoop (snoop) task, to receive an asynchronous deletion response sent by the first NAS server.**

**507: The first NAS server sends the asynchronous deletion response to the NAS client after the distributed NAS server cluster deletes the target directory, where the asynchronous deletion response indicates that the target directory has been deleted.**

The asynchronous deletion response carries a deletion task identifier of a deletion task, a verification code, and an execution result of the deletion task that correspond to the batch delete instruction. The execution result of the deletion task is that the target directory has been deleted. The asynchronous deletion response may be represented by the command word CB_FULL_PATH_REMOVE. Details are not described herein again.

The first NAS server sends the asynchronous deletion response to the NAS client over a channel different from a channel for sending the second deletion response to the NAS client. For example, if the first NAS server is an NFS server, and the corresponding NAS client is an NFS client, the first NAS server sends the asynchronous deletion response to the NAS client over a reverse channel of NFS4. This is not limited in this embodiment of this application.

**508: The NAS client receives the asynchronous deletion response, matches a verification code carried in the asynchronous deletion response and the verification code included in the NAS client, and displays a deletion success prompt of the target directory if the matching succeeds.**

A process of displaying the deletion success prompt of the target directory when the matching succeeds in step 508 is similar to that in step 205, and details are not described again.

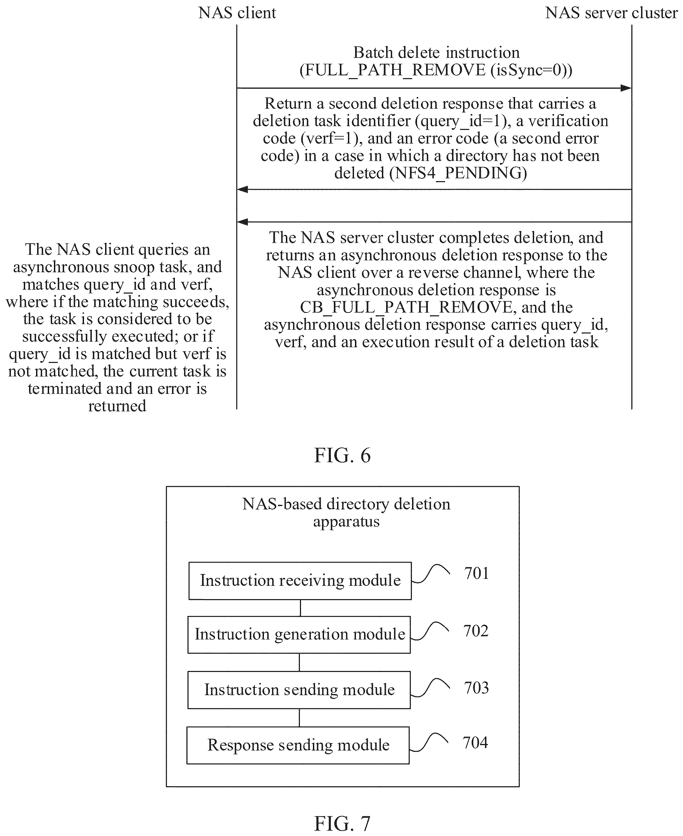

The procedure shown in FIG. 5 is described below by using FIG. 6 as an example. FIG. 6 is a schematic flowchart of a NAS-based directory deletion method in an asynchronous deletion mode according to an embodiment of this application. As shown in FIG. 6, a NAS client sends a batch delete instruction (FULL_PATH_REMOVE) to a first NAS server. In the batch delete instruction, isSync is set to false, to instruct the first NAS server to use the asynchronous deletion mode when the first NAS server executes a deletion task. The first NAS server generates a deletion task identifier (query _id=1) and a verification code (verf=1) that correspond to the batch delete instruction, sets an error code to an error code in a case in which a target directory has not been deleted (NFS4_PENDING), namely, a second error code, and returns, to the NAS client, a second deletion response that carries query _id, verf, and the second error code. A distributed NAS server cluster continues to execute the deletion task. The NAS client checks the error code after receiving the response, and starts an asynchronous snoop task if the error code is the error code (namely, the second error code) in the case of NFS4_PENDING, to receive an asynchronous deletion response sent by the first NAS server. After the distributed NAS server cluster deletes the target directory, the first NAS server returns, to the NAS client over a reverse channel of NFS4, the asynchronous deletion response (CB_FULL_PATH_REMOVE) that carries an execution result of the deletion task, where the asynchronous deletion response further carries query _id and verf. If the NAS client has never received the asynchronous deletion response sent by the first NAS server, the NAS client destroys a deletion session (session) for the target directory, and the deletion task is forcibly terminated as the session is destroyed.

In the foregoing method, when the target directory is to be deleted, the NAS client needs to send only a single batch delete instruction for the target directory to the first NAS server in the distributed NAS server cluster. After receiving the batch delete instruction, the first NAS server generates, based on the single batch delete instruction, a plurality of distributed delete instructions for the plurality of subdirectories in the target directory, and separately sends the plurality of distributed delete instructions to the NAS servers corresponding to the subdirectories for execution. In this way, the NAS client does not need to send a delete instruction for each subdirectory in the target directory. This reduces a quantity of interactions between the NAS client and the NAS server in a process of deleting the target directory, avoids consumption of a large quantity of memory resources, computing resources, and bandwidth resources, and shortens a response delay. Further, each NAS server that is in the distributed NAS server cluster and that stores each level of subdirectory or a file in the target directory sequentially performs a deletion operation based on a corresponding subdirectory level. This avoids a case in which a single NAS server executes the deletion task, and can reduce burden of the NAS server. In addition, in the asynchronous deletion mode, after the distributed NAS server cluster deletes the target directory, the first server actively sends, to the NAS client, the asynchronous deletion response indicating that the target directory has been deleted. The NAS client only needs to start the asynchronous snoop task to receive the asynchronous deletion response. This can further reduce the interactions between the NAS client and the NAS server, save the bandwidth resources, and improve performance of a NAS file deletion operation.

FIG. 7 is a diagram of a structure of a NAS-based directory deletion apparatus according to an embodiment of this application. The apparatus is executed by a first NAS server in a distributed NAS server cluster. The apparatus includes an instruction receiving module 701, an instruction generation module 702, an instruction sending module 703, and a response sending module 704.

The instruction receiving module 701 is configured to receive a batch delete instruction sent by a NAS client, where the batch delete instruction instructs to delete a target directory.

The instruction generation module 702 is configured to generate a plurality of distributed delete instructions based on the target directory indicated by the batch delete instruction, where the plurality of distributed delete instructions instruct to delete a plurality of subdirectories in the target directory, and the plurality of subdirectories are distributed in a plurality of NAS servers in the distributed NAS server cluster.

The instruction sending module 703 is configured to send, to a NAS server in which each of the plurality of subdirectories is located, a distributed delete instruction corresponding to the subdirectory.

The response sending module 704 is configured to send a deletion complete response to the NAS client, where the deletion complete response indicates that the target directory has been deleted.

Optionally, the target directory further includes a plurality of files, and the apparatus further includes:
a deletion module, configured to delete the plurality of files in the target directory from the first NAS server based on the target directory indicated by the batch delete instruction.

Optionally, subdirectories indicated by different distributed delete instructions are located in different NAS servers.

Optionally, the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

Optionally, the response sending module 704 is configured to:
send a first deletion response to the NAS client when the target directory has been deleted within first preset duration, where the first deletion response indicates that the target directory has been deleted.

Optionally, the response sending module 704 is configured to:
send a second deletion response to the NAS client when the target directory has not been deleted within first preset duration, where the second deletion response indicates that the target directory has not been deleted;
receive at least one query instruction sent by the NAS client, where each query instruction is spaced apart by second preset duration, and each query instruction carries a deletion task identifier corresponding to the batch delete instruction; and
return a corresponding query response to the NAS client based on each query instruction, where each query response carries an execution result of the deletion task, and a query response corresponding to a last query instruction in the at least one query instruction indicates that the target directory has been deleted.

Optionally, the response sending module 704 is configured to:
send a second deletion response to the NAS client when receiving the batch delete instruction, where the second deletion response indicates that the directory has not been deleted; and
send an asynchronous deletion response to the NAS client if the directory has been deleted, where the asynchronous deletion response indicates that the target directory has been deleted.

All the instruction receiving module 701, the instruction generation module 702, the instruction sending module 703, and the response sending module 704 may be implemented by software or hardware. For example, the following uses the instruction receiving module 701 as an example to describe an implementation of the instruction receiving module 701. Similarly, for implementations of the instruction generation module 702, the instruction sending module 703, and the response sending module 704, refer to the implementation of the instruction receiving module 701.

The module is used as an example of a software functional unit, and the instruction receiving module 701 may include code run on a computing instance. The computing instance may include at least one of a physical host (a computing device), a virtual machine, and a container. Further, there may be one or more computing instances. For example, the instruction receiving module 701 may include code running on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the instruction receiving module 701 may include at least one computing device, for example, a server. Alternatively, the instruction receiving module 701 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field programmable gate array (field programmable gate array, FPGA), generic array logic (generic array logic, GAL), or any combination thereof.

A plurality of computing devices included in the instruction receiving module 701 may be distributed in a same region, or may be distributed in different regions. The plurality of computing devices included in the instruction receiving module 701 may be distributed in a same AZ, or may be distributed in different AZs. Similarly, the plurality of computing devices included in the instruction receiving module 701 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, steps implemented by the foregoing modules may be specified as required, and different steps in the foregoing NAS-based directory deletion method are respectively implemented through the foregoing modules to implement all functions of the foregoing apparatus. In other words, when the NAS-based directory deletion apparatus provided in the foregoing embodiment implements the NAS-based directory deletion method, division into the foregoing functional modules is merely used as an example for description. During actual application, the foregoing functions may be allocated to different functional modules for implementation based on a requirement. In other words, an inner structure of the apparatus is divided into different functional modules to complete all or some of the functions described above. In addition, the apparatus provided in the foregoing embodiment and the corresponding method embodiment belong to a same concept. For a specific implementation process thereof, refer to the method embodiment. Details are not described herein again.

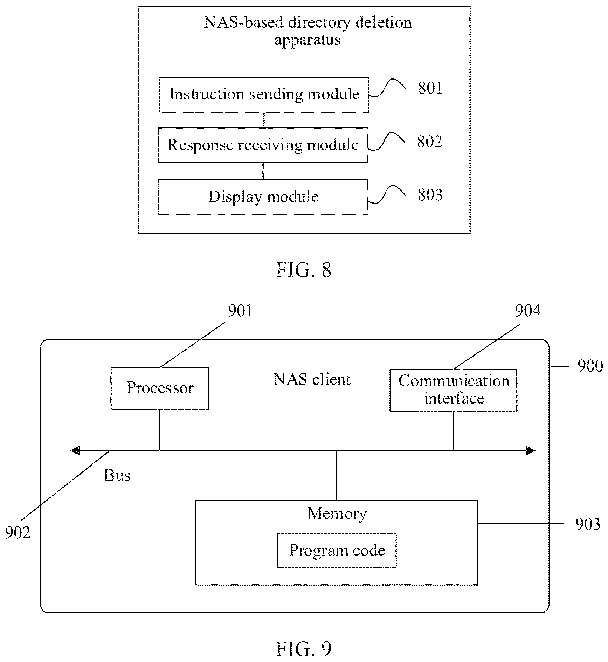

FIG. 8 is a diagram of a structure of a NAS-based directory deletion apparatus according to an embodiment of this application. The apparatus is executed by a NAS client. The apparatus includes an instruction sending module 801, a response receiving module 802, and a display module 803.

The instruction sending module 801 is configured to send a batch delete instruction to a first NAS server in a distributed NAS server cluster in response to a deletion operation performed on a target directory on the NAS client, where the batch delete instruction instructs to delete the target directory.

The response receiving module 802 is configured to receive a deletion complete response sent by the first NAS server, where the deletion complete response indicates that the target directory has been deleted.

The display module 803 is configured to display a deletion success prompt of the target directory, where the deletion success prompt indicates that the target directory has been deleted.

Optionally, the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

Optionally, the response receiving module 802 is configured to:
receive a first deletion response sent by the first NAS server, where the first deletion response indicates that the target directory has been deleted within first preset duration.

Optionally, the response receiving module 802 is configured to:
receive a second deletion response sent by the first NAS server, where the second deletion response indicates that the target directory has not been deleted;
if the NAS client receives, after first preset duration elapses since sending the batch delete instruction, the second deletion response sent by the first NAS server, send a query instruction to the first NAS server at intervals of second preset duration, where the query instruction carries a deletion task identifier and a verification code that correspond to the batch delete instruction; and
receive a query response that is returned by the first NAS server based on each query instruction, where the query response carries an execution result of the deletion task, and a query response corresponding to a last query instruction sent by the NAS client indicates that the target directory has been deleted.

Optionally, the response receiving module 802 is configured to:
receive a second deletion response sent by the first NAS server, where the second deletion response indicates that the target directory has not been deleted; and
receive an asynchronous deletion response sent by the first NAS server, where the asynchronous deletion response indicates that the target directory has been deleted.

It should be noted that, in another embodiment, steps implemented by the foregoing modules may be specified as required, and different steps in the foregoing NAS-based directory deletion method are respectively implemented through the foregoing modules to implement all functions of the foregoing apparatus. In other words, when the NAS-based directory deletion apparatus provided in the foregoing embodiment implements the NAS-based directory deletion method, division into the foregoing functional modules is merely used as an example for description. During actual application, the foregoing functions may be allocated to different functional modules for implementation based on a requirement. In other words, an inner structure of the apparatus is divided into different functional modules to complete all or some of the functions described above. In addition, the apparatus provided in the foregoing embodiment and the corresponding method embodiment belong to a same concept. For a specific implementation process thereof, refer to the method embodiment. Details are not described herein again.

An embodiment of this application provides a NAS client. FIG. 9 is a diagram of a structure of a NAS client according to an embodiment of this application. The NAS client 900 may be a host, a server, a personal computer, or the like. The NAS client 900 may be implemented by using a general bus architecture.

The NAS client 900 includes at least one processor 901, a communication bus 902, a memory 903, and at least one communication interface 904.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits for implementing the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), generic array logic (generic array logic, GAL), or any combination thereof.

The communication bus 902 is configured to transfer information between the foregoing components. The communication bus 902 may be classified into an address bus, a data bus, a control bus, and the like. For ease of representation, only one line is used in FIG. 9 for representation, but it does not indicate that there is only one bus or only one type of bus.

The memory 903 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disk storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that can be accessed by a computer, but is not limited thereto. The memory 903, for example, exists independently, and is connected to the processor 901 through the communication bus 902. The memory 903 may alternatively be integrated with the processor 901.

The communication interface 904 uses any apparatus such as a transceiver, and is configured to communicate with another device or a communication network. The communication interface 904 includes a wired communication interface, and may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an embodiment, the processor 901 may include one or more CPUs.

In an embodiment, the NAS client 900 may include a plurality of processors, and each of the processors may be a single-core (single-CPU) processor, or may be a multi-core (multi-CPU) processor. The processor herein may be one or more devices, circuits, and/or processing cores configured to process data (for example, computer program instructions).

In an embodiment, the NAS client 900 may further include an output device and an input device. The output device communicates with the processor 901, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 901, and may receive an input by a user in a plurality of manners. For example, the input device may be a mouse, a keyboard, a touchscreen device, a sensor device, or the like.

In some embodiments, the memory 903 is configured to store program code for executing the solutions of this application. The processor 901 may execute the program code stored in the memory 903. In other words, the NAS client 900 may implement, by using the processor 909 and the program code in the memory 903, the NAS-based directory deletion method provided in the method embodiments.

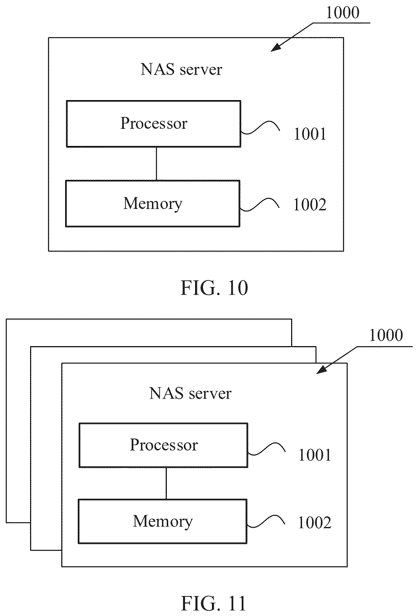

FIG. 10 is a diagram of a structure of a NAS server according to an embodiment of this application. The NAS server 1000 may differ greatly due to different configurations or performance, and may include one or more processors (central processing units, CPUs) 1001 and one or more memories 1002. The one or more memories 1002 store at least one piece of program code, and the at least one piece of program code is loaded and executed by the one or more processors 1001 to implement the foregoing NAS-based directory deletion method. Certainly, the NAS server 1000 may further have components such as a wired or wireless network interface, a keyboard, and an input/output interface, to perform input/output. The NAS server 1000 may further include another component configured to implement a function of the device. Details are not described herein.

FIG. 11 is a diagram of a structure of a distributed NAS server cluster according to an embodiment of this application. As shown in FIG. 11, the distributed NAS server cluster includes a plurality of NAS servers, each NAS server includes a processor and a memory, the memory stores program code, and the processor is configured to execute the program code, to cause the distributed NAS server cluster to perform the foregoing NAS-based directory deletion method.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, both the directory and the file in this application are obtained under full authorization.

A person of ordinary skill in the art may be aware that, in combination with embodiments disclosed in this specification, method steps and units may be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be indirect coupling or communication connections through some interfaces, apparatuses, or units, or may be electrical, mechanical, or other forms of connections.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments in this application.

In addition, units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computing device (which may be a personal computer, a server, a computing device, or the like) to perform all or some of steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items that have basically same effects and functions. It should be understood that there is no logical or time sequence dependency between "first", "second", and "n^{th}", and a quantity and an execution sequence are not limited. It should be further understood that although the following descriptions use terms such as "first" and "second" to describe various elements, these elements should not be limited by the terms. These terms are simply used to distinguish one element from another element. For example, without departing from the scope of the various examples, first preset duration may be referred to as second preset duration, and similarly, the second preset duration may be referred to as the first preset duration. Both the first preset duration and the second preset duration may be preset duration. In some cases, the first preset duration and the second preset duration may be separate and different preset duration.

The term "at least one" in this application means one or more, and the term "a plurality of" in this application means two or more. For example, a plurality of delete instructions mean two or more delete instructions. The terms "system" and "network" are often used interchangeably in this specification.

It should be further understood that, the term "if" may be interpreted as "when..." ("when" or "upon") or "in response to determining" or "in response to detecting". Similarly, depending on context, the phrase "if it is determined..." or "if [the stated condition or event] is detected" may be interpreted as "upon determining..." or "in response to determining..." or "when [the stated condition or event] is detected" or "in response to detecting [the stated condition or event]".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, all or some of procedures or functions in embodiments of this application are generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid state drive)), or the like.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions in embodiments of this application.

## Claims

1. A NAS-based directory deletion method, wherein the method comprises:
receiving, by a first NAS server in a distributed NAS server cluster, a batch delete instruction sent by a NAS client, wherein the batch delete instruction instructs to delete a target directory;
generating, by the first NAS server, a plurality of distributed delete instructions based on the target directory indicated by the batch delete instruction, wherein the plurality of distributed delete instructions instruct to delete a plurality of subdirectories in the target directory, and the plurality of subdirectories are distributed in a plurality of NAS servers in the distributed NAS server cluster;
sending, by the first NAS server to a NAS server in which each of the plurality of subdirectories is located, a distributed delete instruction corresponding to the subdirectory; and
sending, by the first NAS server, a deletion complete response to the NAS client, wherein the deletion complete response indicates that the target directory has been deleted.

2. The method according to claim 1, wherein the target directory further comprises a plurality of files, and the method further comprises:
deleting, by the first NAS server, the plurality of files in the target directory from the first NAS server based on the target directory indicated by the batch delete instruction.

3. The method according to claim 1, wherein the method further comprises:
receiving, by a second NAS server in the distributed NAS server cluster, a distributed delete instruction, and generating, based on a subdirectory indicated by the received distributed delete instruction, a plurality of distributed delete instructions for a plurality of subdirectories in the subdirectory, wherein the plurality of subdirectories in the subdirectory are distributed in the plurality of NAS servers in the distributed NAS server cluster; and
sending, by the second NAS server to a NAS server in which each subdirectory in the subdirectory is located, a distributed delete instruction corresponding to the subdirectory.

4. The method according to claim 3, wherein the subdirectory further comprises a plurality of files, and the method further comprises:
deleting, by the second NAS server, the plurality of files in the subdirectory from the second NAS server based on the subdirectory indicated by the received distributed delete instruction.

5. The method according to any one of claims 1 to 4, wherein
subdirectories indicated by different distributed delete instructions are located in different NAS servers.

6. The method according to claim 1, wherein the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

7. The method according to any one of claims 1 to 6, wherein the sending, by the first NAS server, the deletion complete response to the NAS client comprises:
sending, by the first NAS server, a first deletion response to the NAS client when the target directory has been deleted within first preset duration, wherein the first deletion response indicates that the target directory has been deleted.

8. The method according to any one of claims 1 to 6, wherein the method further comprises:
sending, by the first NAS server, a second deletion response to the NAS client when the target directory has not been deleted within first preset duration, wherein the second deletion response indicates that the target directory has not been deleted; and
the sending, by the first NAS server, the deletion complete response to the NAS client comprises:
receiving, by the first NAS server, at least one query instruction sent by the NAS client, wherein each query instruction is spaced apart by second preset duration, and each query instruction carries a deletion task identifier corresponding to the batch delete instruction; and
returning, by the first NAS server, a corresponding query response to the NAS client based on each query instruction, wherein each query response carries an execution result of an deletion task, and a query response corresponding to a last query instruction in the at least one query instruction indicates that the target directory has been deleted.

9. The method according to any one of claims 1 to 6, wherein the method further comprises:
sending, by the first NAS server, a second deletion response to the NAS client when receiving the batch delete instruction, wherein the second deletion response indicates that the directory has not been deleted; and
the sending, by the first NAS server, the deletion complete response to the NAS client comprises:
sending an asynchronous deletion response to the NAS client when the directory has been deleted, wherein the asynchronous deletion response indicates that the target directory has been deleted.

10. A NAS-based directory deletion method, wherein the method comprises:
sending, by a NAS client, a batch delete instruction to a first NAS server in a distributed NAS server cluster in response to a deletion operation performed on a target directory on the NAS client, wherein the batch delete instruction instructs to delete the target directory;
receiving, by the NAS client, a deletion complete response sent by the first NAS server, wherein the deletion complete response indicates that the target directory has been deleted; and
displaying, by the NAS client, a deletion success prompt of the target directory, wherein the deletion success prompt indicates that the target directory has been deleted.

11. The method according to claim 10, wherein the batch delete instruction further carries a deletion mode identifier, the deletion mode identifier indicates a deletion operation mode used by the first NAS server on the target directory, and the deletion operation mode is any one of a synchronous deletion mode and an asynchronous deletion mode.

12. The method according to claim 10 or 11, wherein the receiving, by the NAS client, the deletion complete response sent by the first NAS server comprises:
receiving, by the NAS client, a first deletion response sent by the first NAS server, wherein the first deletion response indicates that the target directory has been deleted within first preset duration.

13. The method according to claim 10 or 11, wherein the method further comprises:
receiving, by the NAS client, a second deletion response sent by the first NAS server, wherein the second deletion response indicates that the target directory has not been deleted;
when the NAS client receives, after first preset duration elapses since sending the batch delete instruction, the second deletion response sent by the first NAS server, sending, by the NAS client, a query instruction to the first NAS server at intervals of second preset duration, wherein the query instruction carries a deletion task identifier and a verification code that correspond to the batch delete instruction; and
receiving, by the NAS client, a query response that is returned by the first NAS server based on each query instruction, wherein the query response carries an execution result of the deletion task, and a query response corresponding to a last query instruction sent by the NAS client indicates that the target directory has been deleted.

14. The method according to claim 10 or 11, wherein the method further comprises:
receiving, by the NAS client, a second deletion response sent by the first NAS server, wherein the second deletion response indicates that the target directory has not been deleted; and
when the NAS client immediately receives, after sending the batch delete instruction, the second deletion response sent by the first NAS server, the receiving, by the NAS client, the deletion complete response sent by the first NAS server comprises:
receiving, by the NAS client, an asynchronous deletion response sent by the first NAS server, wherein the asynchronous deletion response indicates that the target directory has been deleted.

15. A NAS-based directory deletion apparatus, wherein the apparatus comprises:
an instruction receiving module, configured to receive a batch delete instruction sent by a NAS client, wherein the batch delete instruction instructs to delete a target directory;
an instruction generation module, configured to generate a plurality of distributed delete instructions based on the target directory indicated by the batch delete instruction, wherein the plurality of distributed delete instructions instruct to delete a plurality of subdirectories in the target directory, and the plurality of subdirectories are distributed in a plurality of NAS servers in the distributed NAS server cluster;
an instruction sending module, configured to send, to a NAS server in which each of the plurality of subdirectories is located, a distributed delete instruction corresponding to the subdirectory; and
a response sending module, configured to send a deletion complete response to the NAS client, wherein the deletion complete response indicates that the target directory has been deleted.

16. A NAS-based directory deletion apparatus, wherein the apparatus comprises:
an instruction sending module, configured to send a batch delete instruction to a first NAS server in a distributed NAS server cluster in response to a deletion operation performed on a target directory on a NAS client, wherein the batch delete instruction instructs to delete the target directory;
a response receiving module, configured to receive a deletion complete response sent by the first NAS server, wherein the deletion complete response indicates that the target directory has been deleted; and
a display module, configured to display a deletion success prompt of the target directory, wherein the deletion success prompt indicates that the target directory has been deleted.

17. A NAS server, wherein the NAS server comprises a processor and a memory, the memory stores program code, and the processor is configured to execute the program code, to cause the NAS server to perform the NAS-based directory deletion method according to any one of claims 1 to 9.

18. A distributed NAS server cluster, wherein the distributed NAS server cluster comprises a plurality of NAS servers, each NAS server comprises a processor and a memory, the memory stores program code, and the processor is configured to execute the program code, to cause the distributed NAS server cluster to perform the NAS-based directory deletion method according to any one of claims 1 to 9.

19. A NAS client, wherein the NAS client comprises a processor and a memory, the memory stores program code, and the processor is configured to execute the program code, to cause the NAS client to perform the NAS-based directory deletion method according to any one of claims 10 to 14.
